# EUROPEAN PATENT APPLICATION

(11) **EP 3 328 020 A1**
(43) Date of publication of application: **30.05.2018**
(21) Application number: 17193410.2
(22) Date of filing: 27.09.2017
(51) Int. Cl.: H04L 29/06, H04W 4/00

(54) **CONTROL METHOD AND APPARATUS FOR WIRELESS DEVICE, COMPUTER PROGRAM AND RECORDING MEDIUM**

(30) Priority: 23.11.2016 CN 201611044341
(71) Applicant: Beijing Xiaomi Mobile Software Co., Ltd., Beijing 100085 (CN)
(72) Inventor: FAN, Jialin, Beijing, Beijing 100085 (CN); DONG, Yuquan, Beijing, Beijing 100085 (CN); DING, Ruohan, Beijing, Beijing 100085 (CN)
(74) Representative: dompatent von Kreisler Selting Werner - Partnerschaft von Patent- und Rechtsanwälten mbB

(57) **Abstract**

The present invention relates to a control method and apparatus for a wireless device, a computer program and a recording medium. The method comprises: selecting, on the wireless device by using a first wireless communication mode, an external signal source using a second wireless communication mode and to be connected with the wireless device; and sending, to the wireless device by using the first wireless communication mode, connection information for connecting to the external signal source, so that setting of the second wireless communication mode to be used by the wireless device can be performed using the first wireless communication mode, thereby the wireless device can wirelessly communicate with the external signal source by using the second wireless communication mode. Accordingly, as the second wireless communication mode to be used by the wireless device is set by using the first wireless communication mode, the control technology for a wireless device of the present invention avoids the need to perform cumbersome setting operations for the wireless device by using the second wireless communication mode as well as the need to reset the wireless module of the wireless device, thereby saving time, simplifying operations and improving the user experience.

## Description

### TECHNICAL FIELD

The present invention is related to the technical field of wireless communication, and more particularly, to a control method and apparatus for a wireless device, a computer program and a recording medium.

### BACKGROUND

Wireless communication is becoming more and more popular in people's life. In addition to usually used wireless communication devices such as wireless terminals, there are other types of wireless communication devices on the market. For example, with development of smart homes, more and more electric home appliances are equipped with WiFi modules to surf the Internet. However, existing wireless devices such as smart home appliances and Internet relaying devices usually use only one wireless communication mode. Accordingly, performing network setting for various wireless devices wirelessly in order for them to access the Internet or wirelessly connect to other devices requires relatively complex operations, which lead to bad user experience. Moreover, wireless modules of the wireless devices need to be reset, which consumes too much time.

### SUMMARY

Embodiments of the present invention provide a control method and apparatus for a wireless device, a computer program and a recording medium to overcome the problem in the related art.

According to a first aspect of an embodiment of the present invention, there is provided a control method for a wireless device. The method comprises: selecting, on the wireless device by using a first wireless communication mode, an external signal source which is using a second wireless communication mode and which is to be connected with the wireless device; and sending, to the wireless device by using the first wireless communication mode, connection information for connecting to the external signal source.

Optionally, the wireless device connects to the external signal source based on the connection information by using the second wireless communication mode without being reset.

Optionally, the method further comprises: receiving, from the wireless device by using the first wireless communication mode, a result regarding the wireless device connecting to the external signal source based on the connection information by using the second wireless communication mode.

Optionally, the first wireless communication mode is a Bluetooth mode.

Optionally, the second wireless communication mode is a WiFi mode.

Optionally, the external signal source is a WiFi access point, and the connection information includes an SSID and a connection password of the WiFi access point.

According to a second aspect of an embodiment of the present invention, there is provided a control apparatus for a wireless device. The apparatus comprises: a selection module configured to select, on the wireless device by using a first wireless communication mode, an external signal source which is using a second wireless communication mode and which is to be connected with the wireless device; and a sending module configured to send, to the wireless device by using the first wireless communication mode, connection information for connecting to the external signal source.

Optionally, the wireless device connects to the external signal source based on the connection information by using the second wireless communication mode without being reset.

Optionally, the apparatus further comprises: a reception module configured to receive, from the wireless device by using the first wireless communication mode, a result regarding the wireless device connecting to the external signal source based on the connection information by using the second wireless communication mode.

Optionally, the first wireless communication mode is a Bluetooth mode.

Optionally, the second wireless communication mode is a WiFi mode.

Optionally, the external signal source is a WiFi access point, and the connection information includes an SSID and a connection password of the WiFi access point.

According to a third aspect of an embodiment of the present invention, there is provided a control apparatus for a wireless device. The apparatus comprises: a processor, and a memory configured to store instructions executable by the processor. The processor is configured to: select, on the wireless device by using a first wireless communication mode, an external signal source using a second wireless communication mode and to be connected with the wireless device; and send, to the wireless device by using the first wireless communication mode, connection information for connecting to the external signal source.

In one particular embodiment, the steps of the control method for the wireless device are determined by computer program instructions.

Consequently, according to a fourth aspect, the invention is also directed to a computer program for executing the steps of the control method for the wireless device as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present invention may produce the following advantageous effect.

The present invention provides a control method and apparatus for a wireless device, a computer program and a recording medium. By selecting, on the wireless device by utilizing a first wireless communication mode, an external signal source comprising and using a second wireless communication mode, wherein the wireless device should be connected with the external signal source and then sending, to the wireless device by using the first wireless communication mode, connection information in order to perform connecting the wireless device to the external signal source, setting of the second wireless communication mode used by the wireless device can be performed using the first wireless communication mode, so that the wireless device can wirelessly communicate with the external signal source by using the second wireless communication mode. Accordingly, as the second wireless communication mode to be used by the wireless device is set by using the first wireless communication mode, the control technology for the wireless device according to the present invention avoids the need to perform cumbersome setting operations for the wireless device by using the second wireless communication mode as well as the need to reset the wireless module of the wireless device, thereby saving time, simplifying operations and improving the user experience.

It should be understood that both the foregoing general description and the following detailed description are only exemplary and explanatory and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a control method for a wireless device according to an embodiment of the present invention.
Fig. 2 is a flow chart showing a control method for a wireless device according to another embodiment of the present invention.
Fig. 3 is a block diagram of a control apparatus for a wireless device according to an embodiment of the present invention.
Fig. 4 is a block diagram of a control apparatus for a wireless device according to another embodiment of the present invention.
Fig. 5 is a block diagram of a control apparatus for a wireless device according to yet another embodiment of the present invention.
Fig. 6 is a block diagram of a control apparatus for a wireless device according to still another embodiment of the present invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise indicated. The implementations set forth in the following description of exemplary embodiments do not represent all implementations consistent with the invention. Instead, they are merely examples of apparatuses and methods consistent with aspects related to the invention as recited in the appended claims.

In the control technology for a wireless device of the present invention, by selecting, on the wireless device by using a first wireless communication mode, an external signal source. The external signal source is using a second wireless communication mode and is intended to be connected with the wireless device. Then, connection information are sent to the wireless device by using the first wireless communication mode for connecting the wireless device to the external signal source. Thus, setting of the second wireless communication mode to be used by the wireless device can be performed using the first wireless communication mode, so that the wireless device can wirelessly communicate with the external signal source using the second wireless communication mode. Accordingly, as the second wireless communication mode to be used by the wireless device is set by using the first wireless communication mode, the control technology for the wireless device of the present invention avoids the need to perform cumbersome setting operations for the wireless device by using the second wireless communication mode as well as the need to reset the wireless module of the wireless device, thereby saving time, simplifying operations and improving the user experience.

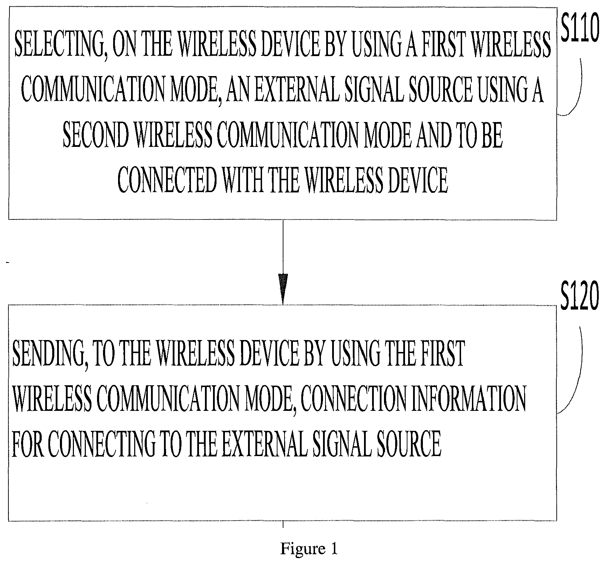

Fig. 1 is a flow chart showing a control method for a wireless device according to an embodiment of the present invention. The method includes the following steps S110 and S120.

In S110, an external signal source using a second wireless communication mode and to be connected with the wireless device is selected on the wireless device by using a first wireless communication mode.

Those skilled in the art can understand that the first and second wireless communication modes may be any two different communication modes already known or to be developed in the future. Known communication modes include 5G communication modes, 4G communication modes, 3G communication modes, 2G communication modes, WiFi communication modes, Bluetooth communication modes and the like.

In one embodiment, the first wireless communication mode may be a Bluetooth mode. The Bluetooth mode has strong portability, and is suitable for many occasions. It is also low in power consumption, less harmful to humans, simple to apply and easy to realize. Therefore, according to the control method for a wireless device of the embodiment of the present invention, the first wireless communication mode may be a Bluetooth mode. As a result, setting of the second wireless communication mode to be used by the wireless device for connecting to an external signal source is facilitated and the needs to perform cumbersome setting operations for the wireless device by using the second wireless communication mode and to reset the wireless module of the wireless device are avoided, thereby saving time, simplifying operations and improving the user experience.

In an embodiment, the second wireless communication mode is a WiFi mode. According to the control method for a wireless device of the embodiment of the present invention, the wireless device uses a WiFi mode for connecting to an external signal source. The WiFi mode is suitable for many occasions. It is also low in power consumption, less harmful to humans, simple to apply and easy to realize.

In S120, connection information for connecting to the external signal source is sent to the wireless device by using the first wireless communication mode.

For example, when the first wireless communication mode is a Bluetooth mode, the connection information for connecting to the external signal source is sent to the wireless device by using the WiFi mode.

In an embodiment, the external signal source is a WiFi access point, and the connection information includes an SSID and a connection password of the WiFi access point. For example, when the first wireless communication mode is a Bluetooth mode, the SSID and the connection password of the WiFi access point is sent to the wireless device by using the Bluetooth mode. According to the control method for a wireless device of the embodiment of the present invention, setting of a WiFi mode of the wireless device can be performed using a Bluetooth mode, and the needs to perform cumbersome setting operations for the wireless device by using the WiFi mode and to reset the wireless module of the wireless device are avoided, thereby saving time, simplifying operations and improving the user experience.

According to the control method for a wireless device of the embodiment of the present invention, by selecting, on the wireless device by using a first wireless communication mode, an external signal source using a second wireless communication mode and to be connected with the wireless device and then sending, to the wireless device by using the first wireless communication mode, connection information for connecting to the external signal source, setting of the second wireless communication mode to be used by the wireless device can be performed using the first wireless communication mode, so that the wireless device can wirelessly communicate with the external signal source by using the second wireless communication mode. Accordingly, as the second wireless communication mode to be used by the wireless device is set by using the first wireless communication mode, the control technology for the wireless device according to the present invention avoids the need to perform cumbersome setting operations for the wireless device by using the second wireless communication mode as well as the need to reset the wireless module, thereby saving time, simplifying operations and improving the user experience.

In an embodiment, the wireless device connects to the external signal source based on the connection information by using the second wireless communication mode without being reset.

According to the control method for a wireless device of the embodiment of the present invention, the wireless device connects to the external signal source based on the connection information by using the second wireless communication mode without being reset, so that time is saved and operations are simplified for connecting of the wireless device to the external signal source by using the second wireless communication mode and the user experience is improved.

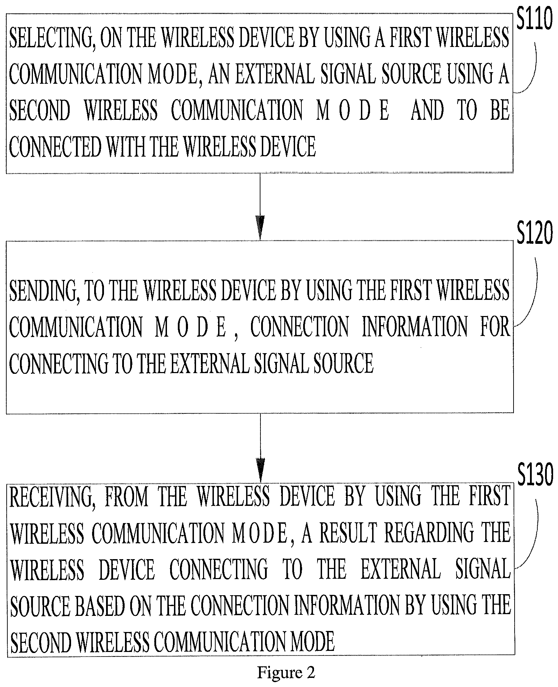

The following will describe a control method for a wireless device of the present invention with reference to Fig. 2. Fig. 2 is a flow chart showing a control method for a wireless device according to another embodiment of the present invention. The steps S110 and S120 in the control method for a wireless device in Fig. 2 are the same as those in the control method for a wireless device in Fig. 1. The difference is that the control method for a wireless device in Fig. 2 further includes a step S130.

In Step S130, a result regarding the wireless device connecting to the external signal source based on the connection information by using the second wireless communication mode is received from the wireless device by using the first wireless communication mode. That is, when the wireless device connects to the external signal source based on the connection information by using the second wireless communication mode without being reset, a result regarding the wireless device connecting to the external signal source based on the connection information by using the second wireless communication mode is received from the wireless device by using the first wireless communication mode. For example, in case a mobile terminal performs the control method for a wireless device according to the present invention, when the wireless device connects to a WiFi access point by using a WiFi mode based on an SSID and a connection password of the WiFi access point, the mobile terminal receives, from the wireless device by using the Bluetooth mode, a result regarding the wireless device connecting to the WiFi access point based on the SSID and the connection password of the WiFi access point by using the WiFi mode. Those skilled in the art can understand that the result regarding the wireless device connecting to the external signal source may be a success or a failure. If the result is a failure, the result may include a failure cause, a failure code or the like. It should be noted that, with the control method for a wireless device according to the present invention, the wireless device does not need resetting when the wireless device connects to a WiFi access point using a WiFi mode based on an SSID and a connection password of the WiFi access point. Therefore, such a connection method saves time, simplifies operations and improves the user experience.

With the control method for a wireless device of the embodiment of the present invention, by receiving, from the wireless device by using the first wireless communication mode, a result regarding the wireless device connecting to the external signal source based on the connection information by using the second wireless communication mode, the result regarding the wireless device connecting to the external signal source by using the second wireless communication mode can be acquired using the first wireless communication mode, so that the user can know in time the result regarding the wireless device connecting to the external signal source by using the second wireless communication mode. Therefore, the control method for a wireless device of the present invention avoids the needs for cumbersome operations of configuring the wireless device and sending the result by using the second wireless communication mode and for resetting the wireless module of the wireless device, thereby saving time, simplifying operations and improving the user experience.

In one application scenario, the wireless device may be a smart home appliance, such as an electric home appliance having a wireless module or a relay. According to the present invention, such a wireless device, particularly a wireless device having only one wireless module (such as a WiFi module), may be added with another wireless module such as a Bluetooth module. In this case, when the wireless device starts, a mobile terminal may be used to pair with and connect to the wireless device by using a Bluetooth mode if the wireless device needs to be set so as to connect to an external signal source such as a WiFi access point. The mobile terminal selects, on the wireless device by using the Bluetooth mode, a WiFi access point to be connected with the wireless device and sends, to the wireless device by using the Bluetooth mode, the SSID and the connection password of the WiFi access point for connecting to the WiFi access point. When the wireless device connects to the WiFi access point based on the SSID and the connection password of the WiFi access point by using a WiFi mode, the mobile terminal receives, from the wireless device by using the Bluetooth mode, a result regarding the wireless device connecting to the WiFi access point based on the connection information by using the WiFi mode.

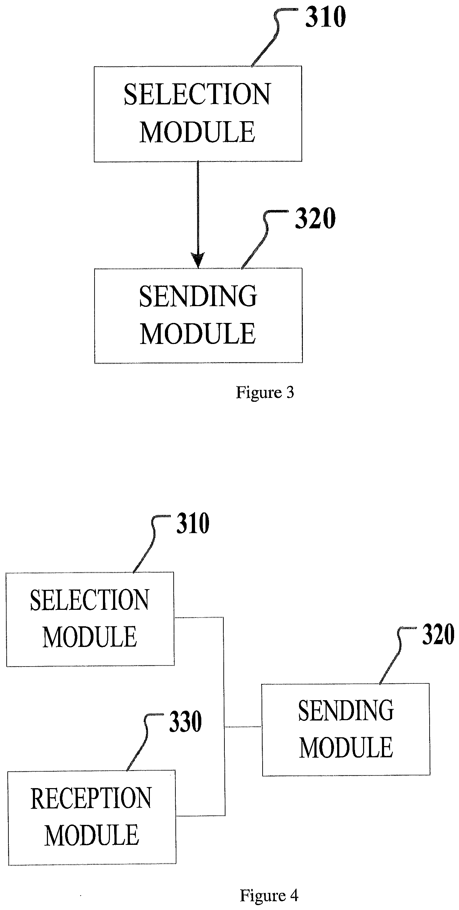

The following will describe a control apparatus for a wireless device according to an embodiment of the present invention with reference to Fig. 3.

Fig. 3 is a block diagram of a control apparatus for a wireless device according to an embodiment of the present invention. As shown in Fig. 3, the control apparatus for a wireless device includes a selection module 310 and a sending module 320.

The selection module 310 is configured to select, on the wireless device by using a first wireless communication mode, an external signal source using a second wireless communication mode and to be connected with the wireless device.

Those skilled in the art can understand that the first and second wireless communication modes may be any two different communication modes already known or to be developed in the future. Known communication modes include 5G communication modes, 4G communication modes, 3G communication modes, 2G communication modes, WiFi communication modes, Bluetooth communication modes and the like.

In one embodiment, the first wireless communication mode may be a Bluetooth mode. The Bluetooth mode has strong portability, and is suitable for many occasions. It is also low in power consumption, less harmful to humans, simple to apply and easy to realize. Therefore, according to the control apparatus for a wireless device of the embodiment of the present invention, the first wireless communication mode may be a Bluetooth mode. As a result, setting of the second wireless communication mode to be used by the wireless device for connecting to an external signal source is facilitated, and the needs to perform cumbersome setting operations for the wireless device by using the second wireless communication mode and to reset the wireless module of the wireless device are avoided, thereby saving time, simplifying operations and improving the user experience.

In an embodiment, the second wireless communication mode is a WiFi mode. According to the control apparatus for a wireless device of the embodiment of the present invention, the wireless device uses a WiFi mode for connecting to an external signal source. The WiFi mode is suitable for many occasions. It is also low in power consumption, less harmful to humans, simple to apply and easy to realize.

The sending module 320 is configured to send, to the wireless device by using the first wireless communication mode, connection information for connecting to the external signal source.

For example, when the first wireless communication mode is a Bluetooth mode, the connection information for connecting to the external signal source is sent to the wireless device by using the WiFi mode.

In an embodiment, the external signal source is a WiFi access point, and the connection information includes an SSID and a connection password of the WiFi access point. For example, when the first wireless communication mode is a Bluetooth mode, the SSID and the connection password of the WiFi access point is sent to the wireless device by using the Bluetooth mode. According to the control apparatus for a wireless device of the embodiment of the present invention, setting of a WiFi mode of the wireless device can be performed using a Bluetooth mode, and the needs to performing cumbersome setting operations for the wireless deivce by using the WiFi mode and to reset the wireless module of the wireless device are avoided, thereby saving time, simplifying operations and improving the user experience.

According to the control apparatus for a wireless device of the embodiment of the present invention, by using a selection module configured for selecting, on the wireless device by using a first wireless communication mode, an external signal source using a second wireless communication mode and to be connected with the wireless device and a sending module configured for sending, to the wireless device by using the first wireless communication mode, connection information for connecting to the external signal source, setting of the second wireless communication mode to be used by the wireless device can be performed using the first wireless communication mode, so that the wireless device can wirelessly communicate with the external signal source by using the second wireless communication mode. Accordingly, as the second wireless communication mode to be used by the wireless device is set by using a first wireless communication mode, the control technology for a wireless device according to the present invention avoids the need to perform cumbersome setting operations for the wireless device by using the second wireless communication mode as well as the need to reset the wireless module of the wireless device, thereby saving time, simplifying operations and improving the user experience.

In an embodiment, the wireless device connects to the external signal source based on the connection information by using the second wireless communication mode without being reset.

According to the control apparatus for a wireless device of the embodiment of the present invention, the wireless device connects to the external signal source based on the connection information by using the second wireless communication mode without being reset, so that time is saved and operations are simplified for connecting of the wireless device to the external signal source by using the second wireless communication mode and the user experience is improved.

The following will describe a control apparatus for a wireless device of an embodiment of the present invention with reference to Fig. 4.

Fig. 4 is a block diagram of a control apparatus for a wireless device according to another embodiment of the present invention. The selection module 310 and the sending module 320 in the control apparatus for a wireless device in Fig. 4 are the same as those in the control apparatus for a wireless device in Fig. 3. The difference is that the control apparatus for a wireless device in Fig. 4 further includes a reception module 330.

The reception module 330 is configured for receiving, from the wireless device by using the first wireless communication mode, a result regarding the wireless device connecting to the external signal source based on the connection information by using the second wireless communication mode. That is, when the wireless device connects to the external signal source based on the connection information by using the second wireless communication mode without being reset, a result regarding the wireless device connecting to the external signal source based on the connection information by using the second wireless communication mode is received from the wireless device by using the first wireless communication mode. For example, in case a mobile terminal acts as the control apparatus for a wireless device according to the present invention, when the wireless device connects to a WiFi access point by using a WiFi mode based on an SSID and a connection password of the WiFi access point, the mobile terminal receives, from the wireless device by using the Bluetooth mode, a result regarding the wireless device connecting to the WiFi access point based on the SSID and the connection password of the WiFi access point by using the WiFi mode. Those skilled in the art can understand that the result regarding the wireless device connecting to the external signal source may be a success or a failure. If the result is a failure, the result may include a failure cause, a failure code or the like. It should be noted that, with the control apparatus for a wireless device according to the present invention, the wireless device does not need resetting when the wireless device connects to a WiFi access point using a WiFi mode based on an SSID and a connection password of the WiFi access point. Therefore, such a connection method saves time, simplifies operations and improves the user experience.

With the control apparatus for a wireless device of the embodiment of the present invention, by receiving, from the wireless device by using the first wireless communication mode, a result regarding the wireless device connecting to the external signal source based on the connection information by using the second wireless communication mode, the result regarding the wireless device connecting to the external signal source by using the second wireless communication mode can be acquired using the first wireless communication mode, so that the user can know in time the result regarding the wireless device connecting to the external signal source by using the second wireless communication mode. Therefore, the control apparatus for a wireless device of the present invention avoids the needs for cumbersome operations of configuring the wireless device and sending the result by using the second wireless communication mode and for resetting the wireless module of the wireless device, thereby saving time, simplifying operations and improving the user experience.

Yet another embodiment of the present invention provides a control apparatus for a wireless device. The apparatus comprises: a processor, and a memory configured to store instructions executable by the processor. The processor is configured for: selecting, on the wireless device by using a first wireless communication mode, an external signal source using a second wireless communication mode and to be connected with the wireless device; and sending, to the wireless device by using the first wireless communication mode, connection information for connecting to the external signal source.

Fig. 4 is a block diagram of a control apparatus for a wireless device according to another embodiment of the present invention. For example, the control apparatus 500 for a wireless device may be an application program or a mobile apparatus such as a mobile phone, a game console, a computer, a digital broadcast terminal, a messaging device, a gaming console, a tablet, a medical device, exercise equipment, a personal digital assistant or the like.

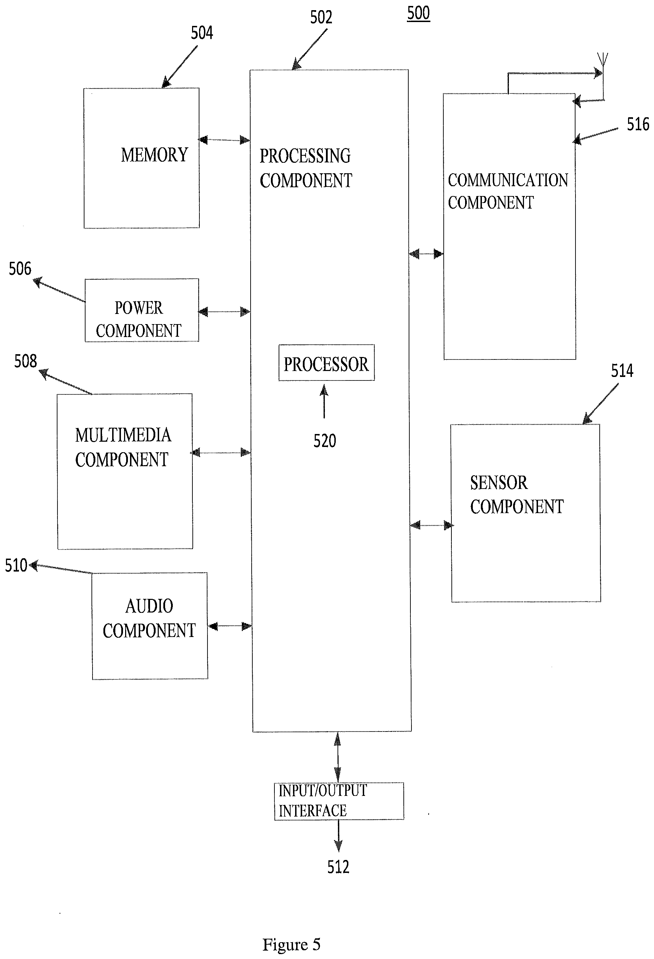

Referring to Fig. 5, the control apparatus 500 for a wireless device may comprise one or more following components: a processing component 502, a memory 504, a power component 506, a multimedia component 508, an audio component 510, an input/output (I/O) interface 512, a sensor component 514 and a communication component 516.

The processing component 502 typically controls overall operations of the control apparatus 500 for a wireless device, such as the operations associated with display, data communications, multimedia operations and recording operations. The processing component 502 may include one or more processors 520 to execute instructions to perform all or part of the steps in the above described methods. Moreover, the processing component 502 may include one or more modules which facilitate the interaction between the processing component 502 and other components. For example, the processing component 502 may comprise a multimedia module to facilitate the interaction between the multimedia component 508 and the processing component 502.

The memory 504 is configured to store various types of data to support the operation of the control apparatus 500 for a wireless device. Examples of such data comprise instructions for any applications or methods operated on the control apparatus 500 for a wireless device, various kinds of data, messages, pictures, video, etc. The memory 504 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the control apparatus 500 for a wireless device. The power component 506 may comprise a power management system, one or more power sources, and any other components associated with the generation, management, and distribution of power in the control apparatus 500 for a wireless device.

The multimedia component 508 comprises a screen providing an output interface between the control apparatus 500 for a wireless device and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the control apparatus 500 for a wireless device is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the control apparatus 500 for a wireless device is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include but are not limited to a home button, a sound volume button, a start button and a locking button.

The sensor component 514 comprises one or more sensors to provide status assessments of various aspects of the control apparatus 500 for a wireless device. For instance, the sensor component 514 may detect an open/closed status of the control apparatus 500 for a wireless device, relative positioning of components, e.g., the display and the keypad, of the control apparatus 500 for a wireless device, a change in position of the control apparatus 500 for a wireless device or a component of the control apparatus 500 for a wireless device, presence or absence of user's contact with the control apparatus 500 for a wireless device, an orientation or an acceleration/deceleration of the control apparatus 500 for a wireless device, and a change in temperature of the control apparatus 500 for a wireless device. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor or a temperature sensor.

The communication component 516 is configured to facilitate communication, wired or wirelessly, between the control apparatus 500 for a wireless device and other devices. The control apparatus 500 for a wireless device can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the control apparatus 500 for a wireless device may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an exemplary embodiment, there is also provided a non-transitory computer-readable storage medium comprising instructions, such as comprised in the memory 504, executable by the processor 520 in the control apparatus 500 for a wireless device, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium stores executable instructions that, when executed by the processor of a mobile terminal, cause the mobile terminal to execute a control method for a wireless device. The method comprises: selecting, on the wireless device by using a first wireless communication mode, an external signal source using a second wireless communication mode and to be connected with the wireless device; and sending, to the wireless device by using the first wireless communication mode, connection information for connecting to the external signal source.

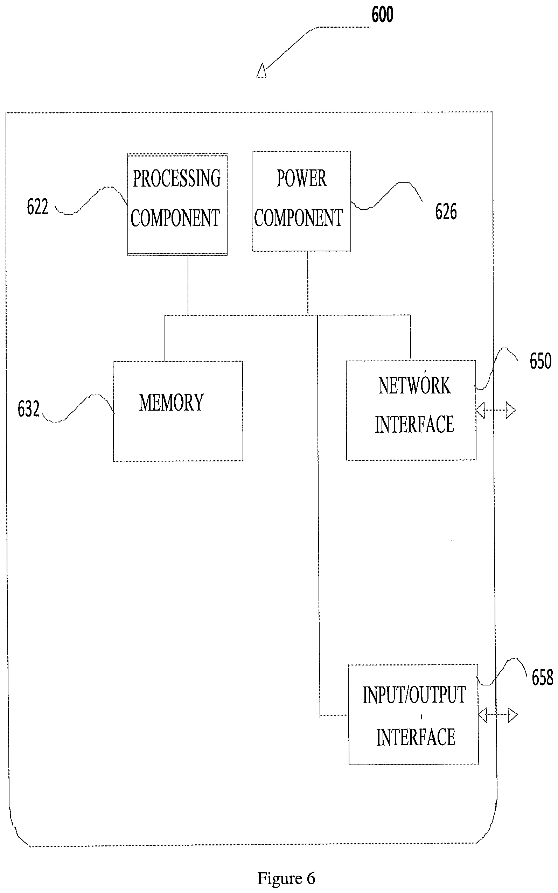

Fig. 6 is a block diagram of a control apparatus for a wireless device according to yet another embodiment of the present invention. For example, the control apparatus 600 for a wireless device may be provided as a server. As shown in Fig. 6, the control apparatus 600 for a wireless device includes a processing component 622 which further includes one or more processors, and memory resources represented by a memory 632 for storing instructions executable by the processing component 622, such as application programs. The application programs stored in the memory 632 may include one or more modules corresponding to a set of instructions. In addition, the processing component 622 is configured to perform instructions so as to perform the above methods.

The control apparatus 600 for a wireless device may also include a power component 626 configured to execute the power supply management of the control apparatus 600 for a wireless device, one or more wireless network interfaces 650 configured to connect the control apparatus 600 for a wireless device to a network, and an input/output (I/O) interface 658. The control apparatus 600 for a wireless device may operate an operating system stored in the memory 632, such as Windows Server™, Mac OS X™, Unix™, Linux™, FreeBSD™ or the like.

A non-transitory computer-readable storage medium stores executable instructions that, when executed by the processor of a server, cause the server to execute a control method for a wireless device. The method comprises: selecting, on the wireless device by using a first wireless communication mode, an external signal source using a second wireless communication mode and to be connected with the wireless device; and sending, to the wireless device by using the first wireless communication mode, connection information for connecting to the external signal source.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A control method for a wireless device, comprising:
selecting (S110), on the wireless device by using a first wireless communication mode, an external signal source which is using a second wireless communication mode and which is to be connected with the wireless device; and
sending (S120), to the wireless device by using the first wireless communication mode, connection information for connecting to the external signal source.

2. The method of claim 1, wherein the wireless device connects to the external signal source based on the connection information by using the second wireless communication mode without being reset.

3. The method of claim 2, further comprising: receiving (S130), from the wireless device by using the first wireless communication mode, a result regarding the wireless device connecting to the external signal source based on the connection information by using the second wireless communication mode.

4. The method of claim 1, wherein the first wireless communication mode is a Bluetooth mode.

5. The method of claim 1, wherein the second wireless communication mode is a WiFi mode.

6. The method of claim 5, wherein the external signal source is a WiFi access point, and the connection information includes an SSID and a connection password of the WiFi access point.

7. A control apparatus for a wireless device, comprising:
a selection module (310) configured to select, on the wireless device by using a first wireless communication mode, an external signal source using a second wireless communication mode and to be connected with the wireless device; and
a sending module (320) configured to send, to the wireless device by using the first wireless communication mode, connection information for connecting to the external signal source.

8. The apparatus of claim 7, wherein the wireless device connects to the external signal source based on the connection information by using the second wireless communication mode without being reset.

9. The apparatus of claim 8, further comprising: a reception module (330) configured to receive, from the wireless device by using the first wireless communication mode, a result regarding the wireless device connecting to the external signal source based on the connection information by using the second wireless communication mode.

10. The apparatus of claim 7, wherein the first wireless communication mode is a Bluetooth mode.

11. The apparatus of claim 7, wherein the second wireless communication mode is a WiFi mode.

12. The apparatus of claim 11, wherein the external signal source is a WiFi access point, and the connection information includes an SSID and a connection password of the WiFi access point.

13. A control apparatus for a wireless device, comprising: a processor (520), and a memory (504) configured to store instructions executable by the processor (520), wherein the processor (520) is configured to:
select, on the wireless device by using a first wireless communication mode, an external signal source using a second wireless communication mode and to be connected with the wireless device; and
send, to the wireless device by using the first wireless communication mode, connection information for connecting to the external signal source.

14. A computer program including instructions for executing the steps of a control method for a wireless device according to any one of claims 1 to 6, when said program is executed by a computer.

15. A recording medium readable by a computer and having recorded thereon a computer program including instructions for executing the steps of a control method for a wireless device according to any one of claims 1 to 6.
